# EUROPEAN PATENT SPECIFICATION

(11) **EP 4 401 918 B1**
(45) Date of publication and mention of the grant of the patent: **18.03.2026**
(21) Application number: 21957104.9
(22) Date of filing: 17.09.2021
(51) Int. Cl.: B23K 37/04, B23Q 3/06, B23K 20/12

(54) **PRESSING DEVICE FOR FIXING WORKPIECE ONTO WORKTABLE**
ANDRÜCKVORRICHTUNG ZUM BEFESTIGEN EINES WERKSTÜCKS AUF EINEM ARBEITSTISCH
DISPOSITIF DE PRESSION PERMETTANT DE FIXER UNE PIÈCE SUR UNE TABLE DE TRAVAIL

(43) Date of publication of application: 24.07.2024
(73) Proprietor: ABB SCHWEIZ AG, 5400 Baden (CH)
(72) Inventor: LIU, Yongping, Shanghai 201824 (CN)
(74) Representative: Zimmermann & Partner Patentanwälte mbB
(86) International application number: PCT/CN2021/118998
(87) International publication number: WO 2023/039819

(56) References cited:
- EP-A2- 2 612 726
- CN-A- 106 553 014
- CN-A- 107 717 526
- CN-U- 204 029 942
- CN-U- 204 954 390
- CN-U- 208 276 427
- CN-U- 209 312 939
- CN-U- 210 360 385
- CN-U- 211 331 780
- DE-A1- 102010 025 521
- US-A- 5 183 284

## Description

### FIELD

Example embodiments of the present disclosure generally relate to the field of workpiece fixing, and more specifically, to a pressing device for fixing a workpiece onto a worktable.

### BACKGROUND

Battery trays of new energy vehicles are used to install power batteries. From the perspective of product safety, the power batteries are not allowed to come into contact with moisture, dust and so on. Currently, the battery trays of the new energy vehicles are usually welded by a friction stir welding process to meet the requirements of high standard and stable sealing. In order to weld several workpieces of a battery tray together, the workpieces need be fixed onto a worktable before the welding.

A conventional manner of fixing the workpieces onto the worktable is to use a hydraulic lever cylinder to press the perimeter of the battery tray, i.e., an outermost edge of the workpieces of the battery tray. Such a workpiece fixing manner is relatively simple. However, since only the perimeter of the battery tray is pressed, deformation of the middle part of the battery tray is hard to be controlled. A surface profile tolerance of the battery tray achieved by welding in such a workpiece fixing manner can only reach about 8mm, which is far beyond a desired surface profile tolerance of 3mm. Therefore, such a workpiece fixing manner is not suitable for fixing the workpieces of the battery tray during the friction stir welding.

Another conventional manner of fixing the workpieces onto the worktable during the friction stir welding is to use a whole plate with several strip-shaped holes to press the workpieces of the battery tray. The whole plate may turn over to cover both the perimeter and the middle part of the battery tray. Each of the strip-shaped holes exposes a welding seam between adjacent workpieces such that the friction stir welding may be performed at the welding seam. Such a workpiece fixing manner has the following disadvantages. Firstly, the pressing mechanism is so heavy that the turning over of the pressing mechanism will take a long time, affecting the production cycle and reducing the production efficiency. Secondly, since the whole plate is a rigid body and each workpiece of the battery tray has a thickness tolerance, some workpieces of the battery tray can be tightly pressed by the whole plate, but some other workpieces of the battery tray may not be tightly pressed by the whole plate, such that the force applied onto the workpieces by the whole plate is non-uniform. Finally, in order to deal with the deformation of the workpieces after the welding, it is necessary to reverse the deformation of the workpieces when the workpieces are clamped. That is, the workpieces after the clamping would have a small arc, so that each welding seam is required to have a different pressing displacement. However, the whole plate cannot adjust the displacement of each workpiece. CN 107 717 526 A discloses a pressing device for fixing a workpiece onto a worktable, comprising a pivotable pressing arm that can be locked at one end of the device in a closed state.

Thus, there is a need for an improved solution for fixing the workpieces onto the worktable.

### SUMMARY

In view of the foregoing problems, the present invention proposes a pressing device for fixing a workpiece onto a worktable as defined in claim 1.

According to embodiments of the present disclosure, the pressing device may provide long-distance compression for the workpiece on the worktable. Moreover, the force applied onto the workpiece may be uniformly distributed, such that the compression is stable. Further, the pressing device has a compact structure, reducing the occupied space.

In some embodiments, the supporting member comprises: an elongated supporting plate extending in the first direction; and a first connecting member coupled to the elongated supporting plate at the first end of the supporting member. With these embodiments, the elongated supporting plate and the first connecting member may be fabricated separately and then assembled together with each other. In this way, the supporting member is easy to be manufactured, reducing the manufacture cost of the supporting member.

In some embodiments, the pressing arm comprises: a first arm coupled to the first end of the supporting member via a first rotating shaft; and a second arm coupled to the first arm and extending in the first direction when the pressing arm is in the closed state, the second arm comprising a third side facing the first side of the supporting member and a fourth side opposite to the third side. With these embodiments, the space for receiving the workpiece may be stably formed between the second arm and the supporting member.

In some embodiments, the pressing arm further comprises: a plurality of pressing blocks arranged on the third side of the second arm and configured to press the workpiece onto the worktable. With these embodiments, the pressing blocks may apply uniform pressure onto the workpiece, such that the workpiece may be fixed stably.

In some embodiments, the pressing arm further comprises: a plurality of gaskets each arranged between the third side of the second arm and the respective pressing block. With these embodiments, the gaskets may adjust the height of the pressing blocks protruding from the second arm so as to eliminate the thickness tolerance between different workpieces. In this way, each workpiece may be pressed firmly.

In some embodiments, the pressing arm further comprises a first positioning member arranged on the third side of the second arm, and the pressing device further comprises a second positioning member arranged on the first side of the supporting member near to the second end of the supporting member and configured to support the first positioning member when the pressing arm is in the closed state. With these embodiments, the second positioning member may stably support the first positioning member when the pressing arm is in the closed state. In this way, when the pressing arm is locked by the locking assembly, the space for receiving the workpiece may have a stable shape.

In some embodiments, the pressing device further comprises: a buffering member arranged on the second positioning member and configured to buffer the second arm when the pressing arm is switched from the opened state to the closed state. With these embodiments, when the pressing arm is switched from the opened state to the closed state, the buffering member may apply a buffering force to the pressing arm, reducing the impact of the pressing arm on the second positioning member.

In some embodiments, the first driving assembly comprises: a mounting base arranged on the first side of the supporting member; a first driving member arranged on the mounting base via a second rotating shaft and comprising a driving shaft capable of switching between an extended state and a retracted state, wherein the pressing arm is in the closed state when the driving shaft is in the retracted state, and the pressing arm is in the opened state when the driving shaft is in the extended state; and a second connecting member arranged on the driving shaft and coupled to the pressing arm via a third rotating shaft. With these embodiments, the first driving member may drive the pressing arm to precisely and reliably rotate between the closed state and the opened state.

In some embodiments, the second driving assembly comprises: a second driving member coupled to the second side of the supporting member and configured to move the supporting member; a guiding shaft coupled to the second side of the supporting member; and a bush surrounding the guiding shaft. With these embodiments, the second driving member may drive the supporting member to move. Meanwhile, the guiding shaft and the bush may ensure that the supporting member moves in the second direction.

In some embodiments, the locking assembly comprises: a third driving member arranged on the first side of the supporting member near to the second end of the supporting member; and a locking member configured to be driven by the third driving member to lock the pressing arm when the pressing arm is in the closed state. With these embodiments, the third driving member may drive the locking member to reliably lock the pressing arm when the pressing arm is in the closed state.

### DESCRIPTION OF DRAWINGS

Drawings described herein are provided to further explain the present disclosure and constitute a part of the present disclosure. The example embodiments of the disclosure and the explanation thereof are used to explain the present disclosure, rather than to limit the present disclosure improperly.
Fig. 1 illustrates a relative arrangement between a pressing device and workpieces to be processed in accordance with an embodiment of the present disclosure;
Fig. 2 illustrates a relative arrangement between two pressing devices and the workpieces to be processed in accordance with an embodiment of the present disclosure;
Fig. 3 illustrates a perspective view of the pressing device in accordance with an embodiment of the present disclosure;
Fig. 4 illustrates a front view of the pressing device in accordance with an embodiment of the present disclosure, in which the pressing arm is in a closed state; and
Fig. 5 illustrates a front view of the pressing device in accordance with an embodiment of the present disclosure, in which the pressing arm is in an opened state.

Throughout the drawings, the same or similar reference symbols are used to indicate the same or similar elements.

### DETAILED DESCRIPTION OF EMBODIMETNS

Principles of the present disclosure will now be described with reference to several example embodiments shown in the drawings.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below. A definition of a term is consistent throughout the description unless the context clearly indicates otherwise.

As described above, the conventional manners of fixing the workpieces onto the worktable have various problems. For example, when the hydraulic lever cylinder is used to press the perimeter of the battery tray, the deformation of the middle part of the battery tray is hard to be controlled. Moreover, when the whole plate with the strip-shaped holes is used to press the workpieces of the battery tray, some workpieces of the battery tray can be tightly pressed by the whole plate, but some other workpieces of the battery tray may not be tightly pressed by the whole plate, such that the force applied onto the workpieces by the whole plate is non-uniform.

According to embodiments of the present disclosure, in order to overcome the typical shortcomings of the conventional solution of fixing the workpieces onto the worktable, a pressing device comprising a supporting member, a pressing arm, a first driving assembly, a locking assembly, and a second driving assembly is provided for fixing the workpiece onto the worktable. The above idea may be implemented in various manners, as will be described in detail in the following paragraphs.

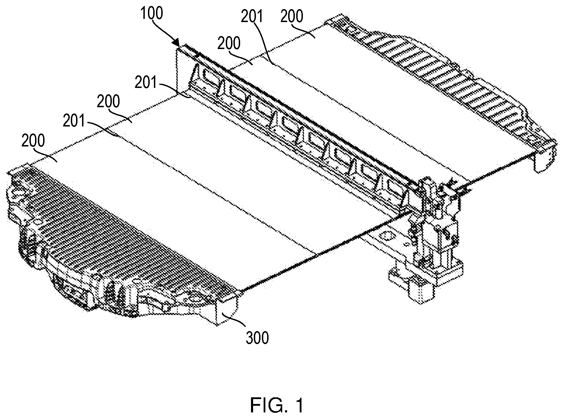

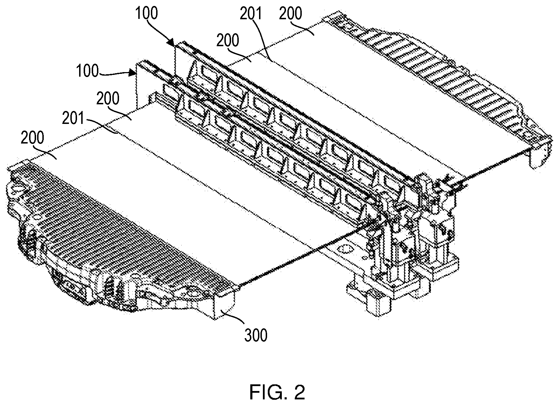

Hereinafter, the principles of the present disclosure will be described in detail with reference to Figs. 1-5. Referring to Figs. 1-2 first, Fig. 1 illustrates a relative arrangement between a pressing device 100 and workpieces 200 to be processed in accordance with an embodiment of the present disclosure, Fig. 2 illustrates a relative arrangement between two pressing devices 100 and the workpieces 200 to be processed in accordance with an embodiment of the present disclosure. As shown in Figs. 1 and 2, several workpieces 200 (for example, two, three, four, or more) are arranged on a worktable 300 so as to be processed in a subsequent procedure.

In some embodiments, the workpieces 200 may be used to constitute a battery tray of a new energy vehicle by a friction stir welding process. The workpieces 200 are arranged side by side on the worktable 300, such that welding seams 201 are formed between the adjacent workpieces 200. The pressing device 100 is arranged around a first workpiece among the workpieces 200 and near to one of the welding seams 201, so as to fix the first workpiece onto the worktable 300 when the pressing device 100 moves downwards.

As shown in Fig. 2, for each welding seam 201, two pressing devices 100 may be provided near to the welding seam 201, so as to press the respective workpieces 200. Fig. 2 only illustrates the pressing devices 100 corresponding to one of the welding seams 201. For each of the other welding seams 201, two pressing devices 100 may be provided in the similar manner.

It is to be understood that, in other embodiments, the workpieces 200 may be fixed onto the worktable 300 for other processing, instead of the friction stir welding process. The scope of the present disclosure is not intended to be limited in this respect.

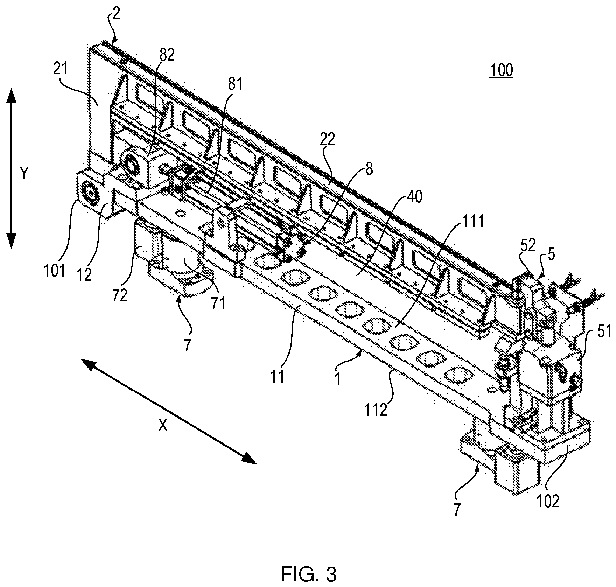

Hereinafter, example structures and operating principles of the pressing device 100 will be described in detail with reference to Figs. 3-5.

Fig. 3 illustrates a perspective view of the pressing device 100 in accordance with an embodiment of the present disclosure. As shown in Fig. 3, the pressing device 100 described herein generally includes a supporting member 1, a pressing arm 2, a first driving assembly 8, a locking assembly 5, and a second driving assembly 7.

The supporting member 1 extends substantially in a first direction X, e.g., a horizontal direction. The supporting member 1 is of an elongated shape. The supporting member 1 includes first and second ends 101, 102 opposite to each other in the first direction X and first and second sides 111, 112 opposite to each other in a second direction Y normal to the first direction X. The supporting member 1 may be used to support other parts of the pressing device 100.

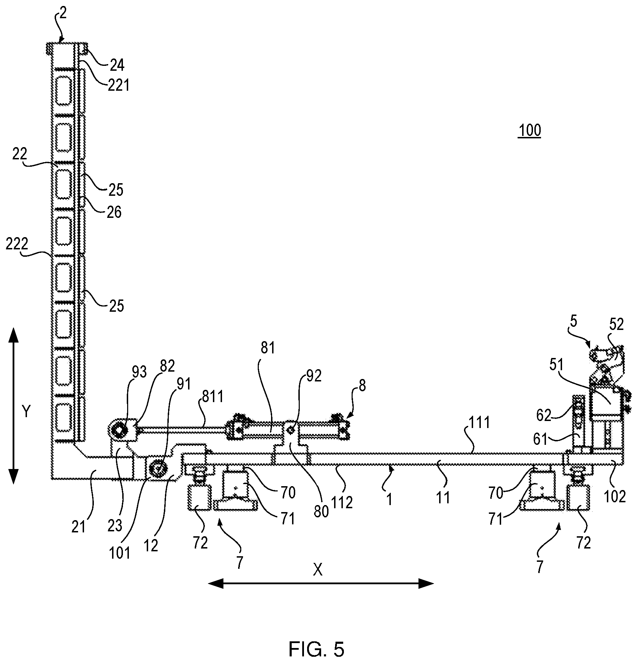

The pressing arm 2 is connected to the first end 101 of the supporting member 1. The pressing arm 2 is capable of rotating between a closed state and an opened state with respect to the supporting member 1. In Fig. 3, the pressing arm 2 is illustrated as being in the closed state. The opened state of the pressing arm 2 is illustrated in Fig. 5, which will be described in detail in the following paragraphs.

As shown in Fig. 3, when the pressing arm 2 is in the closed state, a space 40 for receiving the workpiece 200 is formed between the pressing arm 2 and the supporting member 1. In this way, the pressing device 100 may be arranged around the workpiece 200 so as to press the workpiece 200 downwards and thus fix the workpiece 200 onto the worktable 300, as shown in Fig. 1.

In order to drive the pressing arm 2 to rotate with respect to the supporting member 1, the first driving assembly 8 is arranged on the first side 111 of the supporting member 1 to push or pull the pressing arm 2. In this way, the first driving assembly 8 may drive the pressing arm 2 to rotate between the closed state and the opened state with respect to the supporting member 1.

As shown in Fig. 3, the locking assembly 5 is arranged on the first side 111 of the supporting member 1 near to the second end 102 of the supporting member 1. The locking assembly 5 is configured to lock the pressing arm 2 when the pressing arm 2 is in the closed state. When the pressing arm 2 is locked by the locking assembly 5, the pressing arm 2 will be unable to rotate with respect to the supporting member 1.

The second driving assembly 7 is coupled to the second side 112 of the supporting member 1 and configured to drive the supporting member 1 to move in the second direction Y. As shown in Figs. 1 and 3, when the second driving assembly 7 drives the supporting member 1 to move downwards in the second direction Y, the pressing arm 2 may press the workpiece 200 downwards and thus fix the workpiece 200 onto the worktable 300. In contrast, when the second driving assembly 7 drives the supporting member 1 to move upwards in the second direction Y, the pressing arm 2 may release the workpiece 200.

Since the supporting member 1 and the pressing arm 2 extend in the first direction X, the pressing device 100 may provide long-distance compression for the workpiece 200 on the worktable 300. Moreover, the force applied onto the workpiece 200 may be uniformly distributed, such that the compression is stable. Further, the pressing device 100 has a compact structure, reducing the occupied space.

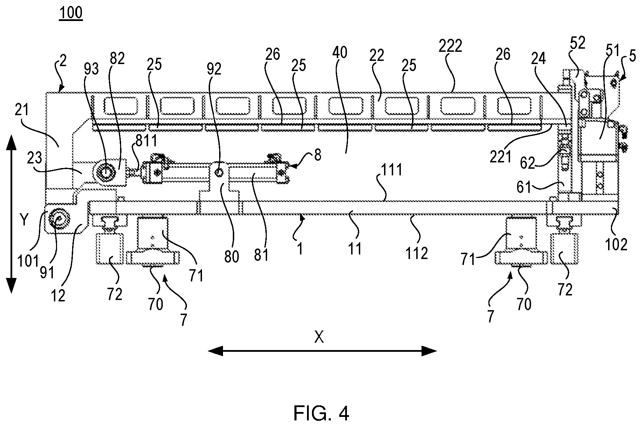

Fig. 4 illustrates a front view of the pressing device 100 in accordance with an embodiment of the present disclosure, in which the pressing arm 2 is in the closed state. Fig. 5 illustrates a front view of the pressing device 100 in accordance with an embodiment of the present disclosure, in which the pressing arm 2 is in the opened state.

In some embodiments, as shown in Figs. 3-5, the supporting member 1 includes an elongated supporting plate 11 and a first connecting member 12. The elongated supporting plate 11 extends substantially in the first direction X. The first connecting member 12 is coupled to the elongated supporting plate 11 at the first end 101 of the supporting member 1. With these embodiments, the elongated supporting plate 11 and the first connecting member 12 may be fabricated separately and then assembled together with each other. In this way, the supporting member 1 is easy to be manufactured, reducing the manufacture cost of the supporting member 1.

It is to be understood that, in other embodiments, the supporting member 1 may be formed integrally or have other structures, as long as the supporting member 1 extends substantially in the first direction. The scope of the present disclosure is not intended to be limited in this respect.

In some embodiments, as shown in Figs. 3-5, the pressing arm 2 includes a first arm 21 and a second arm 22. The first arm 21 is coupled to the first end 101 of the supporting member 1 via a first rotating shaft 91. The second arm 22 is coupled to the first arm 21. The first arm 21 and the second arm 22 may be formed integrally or assembled together in various manners.

As shown in Figs. 3 and 4, the second arm 22 extends substantially in the first direction X when the pressing arm 2 is in the closed state. The second arm 22 includes a third side 221 facing the first side 111 of the supporting member 1 and a fourth side 222 opposite to the third side 221.

As shown in Fig. 5, the second arm 22 extends substantially in the second direction Y when the pressing arm 2 is in the opened state. It is to be understood that, in other embodiments, the second arm 22 may extend in a direction different from the second direction Y when the pressing arm 2 is in the opened state. For example, the second arm 22 may extend obliquely when the pressing arm 2 is in the opened state.

In some embodiments, as shown in Figs. 4 and 5, the pressing arm 2 further includes a plurality of pressing blocks 25 arranged on the third side 221 of the second arm 22. The pressing blocks 25 are arranged side by side on the second arm 22 to press different positions of the workpiece 200 when the pressing arm 2 is in the closed state. With these embodiments, the pressing blocks 25 may apply uniform pressure onto the workpiece 200, such that the workpiece 200 may be fixed stably.

In some embodiments, as shown in Figs. 4 and 5, the pressing arm 2 further includes a plurality of gaskets 26. Each of the gaskets 26 is arranged between the third side 221 of the second arm 22 and the respective pressing block 25. The height of each of the gaskets 26 is adjustable, such that the height of the pressing blocks 25 protruding from the second arm 22 may be adjusted according to the thickness of the workpiece 200. In this way, the thickness tolerance between different workpieces 200 may be eliminated, such that the workpieces 200 may be pressed firmly. Moreover, with such an arrangement, the deformation of the workpieces 200 after the welding may be controlled effectively.

In some embodiments, as shown in Figs. 4 and 5, the pressing arm 2 further includes a first positioning member 24 arranged on the third side 221 of the second arm 22. The pressing device 100 further includes a second positioning member 61 arranged on the first side 111 of the supporting member 1 near to the second end 102 of the supporting member 1. The second positioning member 61 is configured to support the first positioning member 24 when the pressing arm 2 is in the closed state. In other words, when the pressing arm 2 is in the closed state, the second positioning member 61 is aligned with the first positioning member 24 and in contact with the first positioning member 24 so as to support the first positioning member 24 and thus support the pressing arm 2. When the pressing arm 2 is locked by the locking assembly 5, the space 40 for receiving the workpiece 200 may have a stable shape.

In some embodiments, as shown in Figs. 4 and 5, the pressing device 100 further includes a buffering member 62 arranged on the second positioning member 61. The buffering member 62 is configured to buffer the second arm 22 when the pressing arm 2 is switched from the opened state to the closed state. The buffering member 62 may include a spring or other types of buffering components. With these embodiments, when the pressing arm 2 is switched from the opened state to the closed state, the buffering member 62 may apply a buffering force to the pressing arm 2, reducing the impact of the pressing arm 2 on the second positioning member 61.

In some embodiments, as shown in Figs. 4 and 5, the first driving assembly 8 includes a mounting base 80, a first driving member 81, and a second connecting member 82. The mounting base 80 is arranged on the first side 111 of the supporting member 1. The first driving member 81 is arranged on the mounting base 80 via a second rotating shaft 92 and includes a driving shaft 811 capable of switching between an extended state and a retracted state. As shown in Fig. 4, the pressing arm 2 is in the closed state when the driving shaft 811 is in the retracted state. As shown in Fig. 5, the pressing arm 2 is in the opened state when the driving shaft 811 is in the extended state. When the pressing arm 2 rotates between the closed state and the opened state, the first driving member 81 may rotate about the second rotating shaft 92 with respect to the mounting base 80. The second connecting member 82 is arranged on the driving shaft 811 and coupled to a third connecting member 23 of the pressing arm 2 via a third rotating shaft 93. When the pressing arm 2 rotates between the closed state and the opened state, the first driving member 81 may rotate with respect to the mounting base 80. With these embodiments, the first driving member 81 may drive the pressing arm 2 to precisely and reliably rotate between the closed state and the opened state.

In some embodiments, the first driving member 81 includes an oil cylinder. In other embodiments, the first driving member 81 may include other types of driving devices, such as a pneumatic motor. The scope of the present disclosure is not intended to be limited in this respect.

It is to be understood that, in other embodiments, the first driving assembly 8 may have other structures, as long as the first driving assembly 8 may drive the pressing arm 2 to rotate with respect to the supporting member 1.

In some embodiments, as shown in Figs. 4 and 5, the second driving assembly 7 includes a second driving member 72, a guiding shaft 70, and a bush 71. The second driving member 72 is coupled to the second side 112 of the supporting member 1 and configured to drive the supporting member 1 to move. The guiding shaft 70 is coupled to the second side 112 of the supporting member 1. The bush 71 surrounds the guiding shaft 70. The guiding shaft 70 may move with respect to the bush 71 in the second direction Y. The bush 71 may be supported by a bracket (not shown). With these embodiments, the second driving member 72 may drive the supporting member 1 to move. Meanwhile, the guiding shaft 70 and the bush 71 may ensure that the supporting member 1 moves in the second direction Y.

In some embodiments, the second driving member 72 includes an oil cylinder, such as a thin oil cylinder. In other embodiments, the second driving member 72 may include other types of driving devices, such as a pneumatic motor. The scope of the present disclosure is not intended to be limited in this respect.

In some embodiments, as shown in Figs. 4 and 5, the second driving assembly 7 may include two sets of second driving members 72, guiding shafts 70, and bushes 71. The first set of second driving member 72, guiding shaft 70, and bush 71 is arranged near to the first end 101 of the supporting member 1. The second set of second driving member 72, guiding shaft 70, and bush 71 is arranged near to the second end 102 of the supporting member 1. With the two sets of second driving members 72, guiding shafts 70, and bushes 71, the stability and reliability of the movement of the supporting member 1 can be further improved.

It is to be understood that, in other embodiments, the second driving assembly 7 may have other structures, as long as the second driving assembly 7 may drive the supporting member 1 to move in the second direction Y.

In some embodiments, as shown in Figs. 4 and 5, the locking assembly 5 includes a third driving member 51 and a locking member 52. The third driving member 51 is arranged on the first side 111 of the supporting member 1 near to the second end 102 of the supporting member 1. The locking member 52 is configured to be driven by the third driving member 51 to lock the pressing arm 2 when the pressing arm 2 is in the closed state. With these embodiments, the third driving member 51 may drive the locking member 52 to reliably lock the pressing arm 2 when the pressing arm 2 is in the closed state.

In some embodiments, the third driving member 51 includes an oil cylinder, such as a lever cylinder. In other embodiments, the third driving member 51 may include other types of driving devices, such as a pneumatic motor. The scope of the present disclosure is not intended to be limited in this respect.

It is to be understood that, in other embodiments, the locking assembly 5 may have other structures, as long as the locking assembly 5 may lock the pressing arm 2 when the pressing arm 2 is in the closed state.

Hereinafter, the operation of the pressing device 100 will be described in detail with reference to Figs. 4 and 5.

As shown in Fig. 4, the driving shaft 811 of the first driving assembly 8 is in the retracted state, such that the pressing arm 2 is in the closed state. At this time, the first positioning member 24 is supported by the second positioning member 61, and the pressing arm 2 is locked by the locking assembly 5. The second driving assembly 7 may drive the supporting member 1 to move downwards, such that the pressing arm 2 presses the workpiece 200 arranged in the space 40. In this way, the workpiece 200 may be fixed onto the worktable 300 for further processing, such as the welding.

In order to release the workpiece 200 after the completion of the processing, the second driving assembly 7 may drive the supporting member 1 to move upwards, such that the pressing arm 2 does not press the workpiece 200. Then, as shown in Fig. 5, the locking assembly 5 unlocks the pressing arm 2, and the driving shaft 811 of the first driving assembly 8 transitions from the retracted state into the extended state, such that the pressing arm 2 is in the opened state. At this time, the workpiece 200 may be taken out from the worktable 300.

The inventors found that a surface profile tolerance of the battery tray achieved by welding in such a workpiece fixing manner can reach about 3mm, or even smaller. Thus, the pressing device 100 according to embodiments of the present disclosure is suitable for fixing the workpieces of the battery tray during the friction stir welding.

## Claims

1. A pressing device (100) for fixing a workpiece (200) onto a worktable (300), comprising:
a supporting member (1) extending in a first direction (X) and comprising first and second ends (101, 102) opposite to each other in the first direction (X) and first and second sides (111, 112) opposite to each other in a second direction (Y) normal to the first direction (X);
a pressing arm (2) connected to the first end (101) of the supporting member (1) and being capable of rotating between a closed state and an opened state with respect to the supporting member (1), wherein a space (40) for receiving the workpiece (200) is formed between the pressing arm (2) and the supporting member (1) when the pressing arm (2) is in the closed state;
a first driving assembly (8) arranged on the first side (111) of the supporting member (1) and configured to drive the pressing arm (2) to rotate between the closed state and the opened state with respect to the supporting member (1);
a locking assembly (5) arranged on the first side (111) of the supporting member (1) near to the second end (102) of the supporting member (1) and configured to lock the pressing arm (2) when the pressing arm (2) is in the closed state; and
a second driving assembly (7) coupled to the second side (112) of the supporting member (1) and configured to drive the supporting member (1) to move in the second direction (Y).

2. The pressing device (100) according to claim 1, wherein the supporting member (1) comprises:
an elongated supporting plate (11) extending in the first direction (X); and
a first connecting member (12) coupled to the elongated supporting plate (11) at the first end (101) of the supporting member (1).

3. The pressing device (100) according to claim 1, wherein the pressing arm (2) comprises:
a first arm (21) coupled to the first end (101) of the supporting member (1) via a first rotating shaft (91); and
a second arm (22) coupled to the first arm (21) and extending in the first direction (X) when the pressing arm (2) is in the closed state, the second arm (22) comprising a third side (221) facing the first side (111) of the supporting member (1) and a fourth side (222) opposite to the third side (221).

4. The pressing device (100) according to claim 3, wherein the pressing arm (2) further comprises:
a plurality of pressing blocks (25) arranged on the third side (221) of the second arm (22) and configured to press the workpiece (200) onto the worktable (300).

5. The pressing device (100) according to claim 4, wherein the pressing arm (2) further comprises:
a plurality of gaskets (26) each arranged between the third side (221) of the second arm (22) and the respective pressing block (25).

6. The pressing device (100) according to claim 3, wherein the pressing arm (2) further comprises a first positioning member (24) arranged on the third side (221) of the second arm (22), and
wherein the pressing device (100) further comprises a second positioning member (61) arranged on the first side (111) of the supporting member (1) near to the second end (102) of the supporting member (1) and configured to support the first positioning member (24) when the pressing arm (2) is in the closed state.

7. The pressing device (100) according to claim 6, further comprising:
a buffering member (62) arranged on the second positioning member (61) and configured to buffer the second arm (22) when the pressing arm (2) is switched from the opened state to the closed state.

8. The pressing device (100) according to claim 1, wherein the first driving assembly (8) comprises:
a mounting base (80) arranged on the first side (111) of the supporting member (1);
a first driving member (81) arranged on the mounting base (80) via a second rotating shaft (92) and comprising a driving shaft (811) capable of switching between an extended state and a retracted state, wherein the pressing arm (2) is in the closed state when the driving shaft (811) is in the retracted state, and the pressing arm (2) is in the opened state when the driving shaft (811) is in the extended state; and
a second connecting member (82) arranged on the driving shaft (811) and coupled to the pressing arm (2) via a third rotating shaft (93).

9. The pressing device (100) according to claim 1, wherein the second driving assembly (7) comprises:
a second driving member (72) coupled to the second side (112) of the supporting member (1) and configured to move the supporting member (1);
a guiding shaft (70) coupled to the second side (112) of the supporting member (1); and
a bush (71) surrounding the guiding shaft (70).

10. The pressing device (100) according to claim 1, wherein the locking assembly (5) comprises:
a third driving member (51) arranged on the first side (111) of the supporting member (1) near to the second end (102) of the supporting member (1); and
a locking member (52) configured to be driven by the third driving member (51) to lock the pressing arm (2) when the pressing arm (2) is in the closed state.

## Patentansprüche

1. Andrückvorrichtung (100) zum Befestigen eines Werkstücks (200) auf einem Arbeitstisch (300), Folgendes umfassend:
ein Stützelement (1), das sich in eine erste Richtung (X) erstreckt und ein erstes und zweites Ende (101, 102), die in der ersten Richtung (X) entgegengesetzt sind, sowie eine erste und zweite Seite (111, 112), die in einer zweiten Richtung (Y) senkrecht zur ersten Richtung (X) entgegengesetzt sind, umfasst;
einem Andrückarm (2), der mit dem ersten Ende (101) des Stützelements (1) verbunden und in der Lage ist, sich in Bezug auf das Stützelement (1) zwischen einem geschlossenen und einem geöffneten Zustand zu drehen, wobei ein Raum (40) zur Aufnahme des Werkstücks (200) zwischen dem Andrückarm (2) und dem Stützelement (1) gebildet wird, wenn sich der Andrückarm (2) im geschlossenen Zustand befindet;
eine erste Antriebsbaugruppe (8), die an der ersten Seite (111) des Stützelements (1) angeordnet und dazu ausgelegt ist, den Andrückarm (2) anzutreiben, sich in Bezug auf das Stützelement (1) zwischen dem geschlossenen und dem geöffneten Zustand zu drehen;
eine Verriegelungsbaugruppe (5), die an der ersten Seite (111) des Stützelements (1) in der Nähe des zweiten Endes (102) des Stützelements (1) angeordnet und dazu ausgelegt ist, den Andrückarm (2) zu verriegeln, wenn sich der Andrückarm (2) im geschlossenen Zustand befindet; und
eine zweite Antriebsbaugruppe (7), die mit der zweiten Seite (112) des Stützelements (1) gekoppelt und dazu ausgelegt ist, das Stützelement (1) anzutreiben, sich in die zweite Richtung (Y) zu bewegen.

2. Andrückvorrichtung (100) nach Anspruch 1, wobei das Stützelement (1) Folgendes umfasst:
eine längliche Stützplatte (11), die sich in die erste Richtung (X) erstreckt, und
ein erstes Verbindungselement (12), das am ersten Ende (101) des Stützelements (1) mit der länglichen Stützplatte (11) gekoppelt ist.

3. Andrückvorrichtung (100) nach Anspruch 1, wobei der Andrückarm (2) Folgendes umfasst:
einem ersten Arm (21), der über eine erste Drehwelle (91) mit dem ersten Ende (101) des Stützelements (1) gekoppelt ist, und
einen zweiten Arm (22), der mit dem ersten Arm (21) gekoppelt ist und sich in die erste Richtung (X) erstreckt, wenn sich der Andrückarm (2) im geschlossenen Zustand befindet, wobei der zweite Arm (22) eine dritte Seite (221), die der ersten Seite (111) des Stützelements (1) zugewandt ist, und eine vierte Seite (222) gegenüber der dritten Seite (221) umfasst.

4. Andrückvorrichtung (100) nach Anspruch 3, wobei der Andrückarm (2) ferner Folgendes umfasst:
mehrere Andrückblöcke (25), die an der dritten Seite (221) des zweiten Arms (22) angeordnet und dazu ausgelegt sind, das Werkstück (200) auf den Arbeitstisch (300) zu drücken.

5. Andrückvorrichtung (100) nach Anspruch 4, wobei der Andrückarm (2) ferner Folgendes umfasst:
mehrere Dichtungen (26), die jeweils zwischen der dritten Seite (221) des zweiten Arms (22) und dem jeweiligen Andrückblock (25) angeordnet sind.

6. Andrückvorrichtung (100) nach Anspruch 3, wobei der Andrückarm (2) ferner ein erstes Positionierelement (24) umfasst, das an der dritten Seite (221) des zweiten Arms (22) angeordnet ist, und
wobei die Andrückvorrichtung (100) ferner ein zweites Positionierelement (61) umfasst, das an der ersten Seite (111) des Stützelements (1) nahe dem zweiten Ende (102) des Stützelements (1) angeordnet und dazu ausgelegt ist, das erste Positionierelement (24) zu stützen, wenn sich der Andrückarm (2) im geschlossenen Zustand befindet.

7. Andrückvorrichtung (100) nach Anspruch 6, ferner umfassend:
ein Dämpferelement (62), das auf dem zweiten Positionierelement (61) angeordnet und dazu ausgelegt ist, den zweiten Arm (22) zu dämpfen, wenn der Andrückarm (2) vom geöffneten Zustand in den geschlossenen Zustand geschaltet wird.

8. Andrückvorrichtung (100) nach Anspruch 1, wobei die erste Antriebsbaugruppe (8) Folgendes umfasst:
eine Montagebasis (80), die an der ersten Seite (111) des Stützelements (1) angeordnet ist;
ein erstes Antriebselement (81), das über eine zweite Drehwelle (92) an der Montagebasis (80) angeordnet ist und eine Antriebswelle (811) umfasst, die in der Lage ist, zwischen einem ausgefahrenen und einem eingefahrenen Zustand umzuschalten, wobei sich der Andrückarm (2) im geschlossenen Zustand befindet, wenn sich die Antriebswelle (811) im eingefahrenen Zustand befindet, und sich der Andrückarm (2) im geöffneten Zustand befindet, wenn sich die Antriebswelle (811) im ausgefahrenen Zustand befindet; und
ein zweites Verbindungselement (82), das auf der Antriebswelle (811) angeordnet und über eine dritte Drehwelle (93) mit dem Andrückarm (2) gekoppelt ist.

9. Andrückvorrichtung (100) nach Anspruch 1, wobei die zweite Antriebsbaugruppe (7) Folgendes umfasst:
ein zweites Antriebselement (72), das mit der zweiten Seite (112) des Stützelements (1) gekoppelt und dazu ausgelegt ist, das Stützelement (1) zu bewegen;
eine Führungswelle (70), die mit der zweiten Seite (112) des Stützelements (1) gekoppelt ist; und
eine Buchse (71), die die Führungswelle (70) umgibt.

10. Andrückvorrichtung (100) nach Anspruch 1, wobei die Verriegelungsbaugruppe (5) Folgendes umfasst:
ein drittes Antriebselement (51), das an der ersten Seite (111) des Stützelements (1) nahe dem zweiten Ende (102) des Stützelements (1) angeordnet ist; und
ein Verriegelungselement (52), das dazu ausgelegt ist, vom dritten Antriebselement (51) angetrieben zu werden, um den Andrückarm (2) zu verriegeln, wenn sich der Andrückarm (2) im geschlossenen Zustand befindet.

## Revendications

1. Dispositif de pression (100) destiné à fixer une pièce de travail (200) sur une table de travail (300), comprenant :
un élément de support (1) s'étendant dans une première direction (X) et comprenant des première et seconde extrémités (101, 102) opposées l'une à l'autre dans la première direction (X) et des premier et deuxième côtés (111, 112) opposés l'un à l'autre dans une seconde direction (Y) normale à la première direction (X) ;
un bras de pression (2) raccordé à la première extrémité (101) de l'élément de support (1) et capable se mettre en rotation entre un état fermé et un état ouvert par rapport à l'élément de support (1), dans lequel un espace (40) pour recevoir la pièce de travail (200) est formé entre le bras de pression (2) et l'élément de support (1) lorsque le bras de pression (2) est dans l'état fermé ;
un premier ensemble d'entraînement (8) agencé sur le premier côté (111) de l'élément de support (1) et configuré pour entraîner le bras de pression (2) pour qu'il se mette en rotation entre l'état fermé et l'état ouvert par rapport à l'élément de support (1) ;
un ensemble de verrouillage (5) agencé sur le premier côté (111) de l'élément de support (1) à proximité de la seconde extrémité (102) de l'élément de support (1) et configuré pour verrouiller le bras de pression (2) lorsque le bras de pression (2) est dans l'état fermé ; et
un second ensemble d'entraînement (7) couplé au deuxième côté (112) de l'élément de support (1) et configuré pour entraîner l'élément de support (1) pour qu'il se déplace dans la seconde direction (Y).

2. Dispositif de pression (100) selon la revendication 1, dans lequel l'élément de support (1) comprend :
une plaque de support allongée (11) s'étendant dans la première direction (X) ; et
un premier élément de raccordement (12) couplé à la plaque de support allongée (11) à la première extrémité (101) de l'élément de support (1).

3. Dispositif de pression (100) selon la revendication 1, dans lequel le bras de pression (2) comprend :
un premier bras (21) couplé à la première extrémité (101) de l'élément de support (1) par l'intermédiaire d'un premier arbre rotatif (91) ; et
un second bras (22) couplé au premier bras (21) et s'étendant dans la première direction (X) lorsque le bras de pression (2) est dans l'état fermé, le second bras (22) comprenant un troisième côté (221) faisant face au premier côté (111) de l'élément de support (1) et un quatrième côté (222) opposé au troisième côté (221).

4. Dispositif de pression (100) selon la revendication 3, dans lequel le bras de pression (2) comprend en outre :
une pluralité de blocs de pression (25) agencés sur le troisième côté (221) du second bras (22) et configurés pour presser la pièce de travail (200) sur la table de travail (300).

5. Dispositif de pression (100) selon la revendication 4, dans lequel le bras de pression (2) comprend en outre :
une pluralité de joints d'étanchéité (26), chacun agencé entre le troisième côté (221) du second bras (22) et le bloc de pression respectif (25).

6. Dispositif de pression (100) selon la revendication 3, dans lequel le bras de pression (2) comprend en outre un premier élément de positionnement (24) agencé sur le troisième côté (221) du second bras (22), et
dans lequel le dispositif de pression (100) comprend en outre un second élément de positionnement (61) agencé sur le premier côté (111) de l'élément de support (1) à proximité de la seconde extrémité (102) de l'élément de support (1) et configuré pour supporter le premier élément de positionnement (24) lorsque le bras de pression (2) est dans l'état fermé.

7. Dispositif de pression (100) selon la revendication 6, comprenant en outre :
un élément d'amortissement (62) agencé sur le second élément de positionnement (61) et configuré pour amortir le second bras (22) lorsque le bras de pression (2) est commuté de l'état ouvert à l'état fermé.

8. Dispositif de pression (100) selon la revendication 1, dans lequel le premier ensemble d'entraînement (8) comprend :
une base de montage (80) agencée sur le premier côté (111) de l'élément de support (1) ;
un premier élément d'entraînement (81) agencé sur la base de montage (80) par l'intermédiaire d'un deuxième arbre rotatif (92) et comprenant un arbre d'entraînement (811) capable de commuter entre un état étendu et un état rétracté, dans lequel le bras de pression (2) est dans l'état fermé lorsque l'arbre d'entraînement (811) est dans l'état rétracté, et le bras de pression (2) est dans l'état ouvert lorsque l'arbre d'entraînement (811) est dans l'état étendu ; et
un second élément de raccordement (82) agencé sur l'arbre d'entraînement (811) et couplé au bras de pression (2) par l'intermédiaire d'un troisième arbre rotatif (93).

9. Dispositif de pression (100) selon la revendication 1, dans lequel le second ensemble d'entraînement (7) comprend :
un deuxième élément d'entraînement (72) couplé au deuxième côté (112) de l'élément de support (1) et configuré pour déplacer l'élément de support (1) ;
un arbre de guidage (70) couplé au deuxième côté (112) de l'élément de support (1) ; et
une douille (71) entourant l'arbre de guidage (70).

10. Dispositif de pression (100) selon la revendication 1, dans lequel l'ensemble de verrouillage (5) comprend :
un troisième élément d'entraînement (51) agencé sur le premier côté (111) de l'élément de support (1) à proximité de la seconde extrémité (102) de l'élément de support (1) ; et
un élément de verrouillage (52) configuré pour être entraîné par le troisième élément d'entraînement (51) pour verrouiller le bras de pression (2) lorsque le bras de pression (2) est dans l'état fermé.
